# EUROPEAN PATENT APPLICATION

(11) **EP 4 843 758 A2**
(43) Date of publication of application: **25.11.2026**
(21) Application number: 26208799.2
(22) Date of filing: 23.01.2023
(51) Int. Cl.: B29C 65/34

(54) **IMPROVEMENTS IN LINING A PIPELINE**

(62) Document number(s) of the earlier application(s) in accordance with Art. 76 EPC: 23703283.4 / 4 623 237
(71) Applicant: Profloat LLC, Davison, Michigan 48423 (US)
(72) Inventor: Edwards, Russell, Barnsley, S73 0UW (GB)
(74) Representative: Wilson Gunn

(57) **Abstract**

A liner (10) for lining a pipeline is described. The liner comprises a resin carrier layer (12), and a lattice (16) comprising a resistive heating material. A method of using the liner (10) to line a pipeline is also described as well as a system (100) incorporating the liner.

## Description

### Technical Field of the Invention

The present invention relates to a liner for lining a pipeline, a method of lining a pipeline involving the liner, and a system for lining a pipeline including the liner.

### Background to the Invention

In the field of pipeline repair, it is known to repair a pipeline using a liner which is run along the pipeline to cover over any cracks or unwanted holes formed in the pipeline. The so called "inversion technique" may be used to do this. The "inversion technique" involves everting the liner within the pipeline and securing the everted liner to the inner surface of the pipeline. The everted liner may be secured to the inner surface of the pipeline using a heat-curable resin with which the liner is impregnated. The liner may be provided with elongate conductors which extend longitudinally along the length of the liner. When a current is passed along those conductors, the conductors generate heat, which cures the heat-curable resin, thereby securing the liner to the inner surface of the pipeline.

A disadvantage of the prior arrangements with the longitudinally extending conductors is that they do not provide even heating of the resin. This can lead to portions of the liner not being properly secured to the inner surface of the pipeline, meaning those portions migrate out of their intended position. Tears in the liner can also be formed as a result of these poorly attached portions of liner. In addition, these prior liners find it difficult to negotiate bends, which can restrict their use.

It is an object of the present invention to mitigate or obviate at least one problem with prior arrangements for lining a pipeline.

### Summary of the Invention

According to a first aspect of the present invention, there is provided a liner for lining a pipeline, comprising:
a resin carrier layer; and
a lattice comprising a resistive heating material.

The lattice of the present invention ensures even heating of the resin, meaning that there are no portions of liner that are poorly secured to the inner surface of the pipeline, meaning the liner does not migrate out of its intended position and tears in the liner do not develop. Further, the lattice pattern allows multi-axial flexion, which means the liner of the present invention readily negotiates bends in pipelines, meaning it can be applied to a far greater range of pipes than prior liners. In addition, due to the flexion properties of the lattice, stretching or pulling of the lattice will not create too much stress on the lattice elements, reducing the risk of breaks in circuitry during manufacture, handling and installation. A further benefit of the lattice of the present invention is that every lattice element is in contact with multiple other lattice elements. This ensures that should a break in a lattice element occur, it is still able to transfer resistive heat and current at a contact point between lattice elements nearby, ensuring heat transfer is maintained throughout the liner with minimal impact.

The lattice may be a regular lattice. The lattice may comprise a plurality of elongate elements. The lattice may comprise a plurality of intersecting elongate elements.

The plurality of elongate elements may comprise a first set and a second set. The elongate elements of the first set may intersect with the elongate elements of the second set. The elongate elements of the first set may extend in a first direction, mutually parallel, or substantively parallel, to one another. The elongate elements of the second set may extend in a second direction mutually parallel, or substantively parallel, to one another. The first direction may be different to the second direction. The angle between the first and second direction may be 90 degrees or in the range of 70 to 110 degrees. Preferably, the angle is 80 to 100 degrees, and most preferably the angle is 85 to 95 degrees.

Each elongate element in the first set and/or the second set may be separated from the adjacent element in the set by a separation that is greater than the greatest transverse dimension (W) of the element. The separation between adjacent elongate elements in the first and second sets may be at least 2W or in the range of 2W to 40W. Preferably, the separation is in the range of 3W to 30W, and most preferably in the range of 5W to 20W.

Each elongate element may have a similar transverse cross-sectional profile. The cross-sectional profiles of the elongate elements may be substantially circular, substantially oval, substantially rectangular or any other suitable form.

The liner may further comprise:
first and second ribbons extending along the length of the liner and including a non-conductive strip of material carrying at least one longitudinally extending and electrically conductive wire in contact with the lattice. Each ribbon may carry a plurality of electrically conductive wires. The electrically conductive wires may have a wire greatest traverse width dimension (ECW) and each elongate element may have a greatest transverse width dimension (W). ECW may be greater than W.

The longitudinally extending wires have multiple points of contact with the lattice along its length ensuring the lattice is well supplied with current in use, thereby leading to a good heating of the resin. The ribbons ensure that the longitudinally extending wires are securely held in their intended position.

The liner may further comprise a first protective layer. The first protective layer may be located between the lattice and the resin carrier layer.

The liner may further comprise a second protective layer. The lattice may be located between the first protective layer and the second protective layer.

The first protective layer may be waterproof. Optionally, the second protective layer comprises one or more of polyvinyl chloride, polythene, polyurethane and silicone.

The second protective layer may be waterproof. Optionally, the first protective layer comprises one or more of polyvinyl chloride, polythene, polyurethane and silicone.

The first protective layer may be formed from adhesive.

The liner may be tubular. The tubular liner may be formed from a rolled sheet having opposing edges which are connected to each other. Preferably, the opposing edges may be connected by at least one non-conductive thread. Alternatively, staples, adhesive or tape may be used to connect the opposing edges. The first and second ribbons may be provided adjacent the connected opposing edges. Here "provided adjacent the connected opposing edges" means the first and second ribbons run alongside the connected opposing edges.

In practice, the electrically conductive wires carried by the first and second ribbons are supplied with current and have different polarities. The construction of the liner of the present invention ensures that current flows longitudinally along the wires but also circumferentially via the lattice from the electrically conductive wire carried by the first ribbon to the electrically conductive wire carried by the second ribbon when the electrically conductive wire of the first ribbon has a negative polarity and the electrically conductive wire of the second ribbon has a positive polarity. This means the lattice is well supplied with current and leads to efficient heating of the heat-curable resin.

The resin carrier layer may carry heat-curable resin. Alternatively, the resin carrier layer may be provided without resin and have resin added to it at the point of use.

The resin carrier layer may be impregnated with a heat-curable resin. Alternatively, the resin carrier layer may be capable of absorbing the heat-curable resin. In particular, the resin carrier layer may be produced without the heat-curable resin and may be impregnated with the heat-curable resin just before a pipelining operation.

Alternatively, the resin carrier layer may be non-absorbent to the heat curable resin and the heat-curable resin may be applied to a surface of the resin carrier layer.

Any suitable heat-curable resin may be employed such as epoxy, silicate, polyester and vinylester. The resin carrier layer may comprise an impregnated material which is impregnated with the resin. The impregnated material may be polyester felt, glass fibre or any other suitable material.

The liner may further comprise at least one near field communication device.

This means data pertaining to the liner can be stored. The information stored could, for example, be: the date of installation, individual installer details, company installer details, materials supplier details, job number, customer details, resin type, resin batch number, liner batch number, the liner type and length, installation company contact details or the temperature used to cure the liner. This ensures that a subsequent relining job is carried out as quickly, efficiently and effectively as possible.

The near field communication device may comprise a data store. The near field communication device may be operable to communicate with an external device via any suitable communication protocol, including but not limited to FTP (File Transfer Protocol), SMTP (Simple Mail Transfer Protocol), and finger protocol.

The near field communication device may be attached to the liner during installation or during its manufacture.

The liner may further comprise at least one temperature sensor. The at least one temperature sensor may comprise a plurality of temperature sensors spaced apart along the length of the liner. The at least one temperature sensor may be embedded in the liner.

The at least one temperature sensor enables accurate recording of the temperature of the liner at points along its length. If the reading indicates that one part of the liner is too hot, the supply of current to the lattice can be adjusted. This results in even heating of the liner/heat-curable resin.

The at least one temperature sensor may have a temperature communication unit and a temperature data store. The temperature communication unit may be operable to communicate with an external device via any suitable communication protocol, including but not limited to FTP (File Transfer Protocol), SMTP (Simple Mail Transfer Protocol), and finger protocol.

According to a second aspect of the present invention, there is provided a method of lining a pipeline, comprising:
i) providing a liner for the pipeline, including:
   a resin carrier layer, and a lattice comprising a resistive heating material,
   wherein the resin carrier layer carries a heat-curable resin;
ii) everting the liner within the pipeline such that the resin carrier layer is positioned on an inner surface of the pipeline; and
iii) passing an electrical current through the lattice to heat the lattice and cure the resin of the resin carrier layer.

The method of the second aspect of the present invention may incorporate any or all features of the liner of the first aspect of the present invention as desired or as appropriate.

The providing step may comprise applying the heat-curable resin to a surface of the resin carrier layer or impregnating the resin carrier layer with the heat-curable resin.

The method may further comprise securing to the liner a first near field communication device carrying data pertaining to the liner.

This means data pertaining to the liner can be stored. This ensures that a subsequent relining operation is carried out as quickly, efficiently and effectively as possible.

The method may comprise the step of loading information pertaining to the liner onto the first near field communication device. The step of loading the information pertaining to the liner onto the first near field communication device may be performed before steps ii) and iii).

This ensures that the loading of information onto the near field communication device is always carried out, meaning it is always possible in a subsequent lining operation to obtain data from the previous lining operation.

The liner may further comprise at least one temperature sensor. The method may comprise adjusting the supply of electrical current to the lattice in response to a signal from the at least one temperature sensor.

The liner may be a new liner, and an old liner lined the pipe before providing step i). The method may further comprise the step of obtaining information from a second near field communication device secured to the old liner using a near field communication device reader. The old liner may be removed before providing step i).

This ensures the lining operation is efficient as possible because, for example, it allows the operator to select the correct liner for the operation and to ensure that the correct heating of the liner is performed.

According to a third aspect of the present invention, there is provided a system for lining a pipeline, comprising:
a liner for the pipeline, including:
   a resin carrier layer, and
   a lattice comprising a resistive heating material; and
a controller operable to control a supply of current to the lattice.

The system of the third aspect of the present invention may incorporate any or all features of the liner of the first aspect of the present invention or the method of the second aspect of the present invention as desired or as appropriate.

The system may further comprise a near field communication device reader in communication with the controller. The controller may be connected to or connectable to a display and/or data store and the controller is arranged to communicate a first signal from the near field communication device reader to the display and/or data store.

This allows the user to be provided with information relating to the liner. This ensures the lining operation is efficient as possible because, for example, it allows the operator to select the correct liner for the operation and to ensure that the correct heating of the liner is performed.

The system may further comprise a machine operable to load data onto a near field communication device.

This means data pertaining to the liner can be stored. This ensures that a subsequent relining operation is carried out as quickly, efficiently and effectively as possible.

The controller may be arranged to not supply current to the lattice until the near field communication device has been loaded with the data.

This ensures that the loading of information onto the near field communication device is always carried out, meaning it is always possible in a subsequent lining operation to obtain data from the previous lining operation.

The liner may further comprise at least one temperature sensor. The controller may be in communication with the at least one temperature sensor. The controller may be arranged to adjust the supply of current to the lattice in response to a second signal from the at least one temperature sensor.

This results in even heating of the liner/heat-curable resin.

The system may further comprise an alarm in communication with the controller. The controller may be arranged to activate the alarm if the controller receives a third signal from the at least one temperature sensor that a sensed temperature has exceeded a pre-determined threshold.

This ensures that the liner/heat-curable resin is not overheated.

### Detailed Description of the Invention

In order that the invention may be more clearly understood one or more embodiments thereof will now be described, by way of example only, with reference to the accompanying drawings, of which:
Figure 1 shows a liner for a pipeline;
Figure 2 shows a resin carrier layer of the liner;
Figure 3 shows a first protective layer of the liner;
Figures 4A and 4B show a lattice of the liner;
Figure 5A shows first and second ribbons of the liner;
Figure 5B shows electrically conductive wires of the first ribbon extending across the lattice;
Figure 6 shows a longitudinal cross-section of a sheet for forming the liner of Figure 1;
Figure 7 shows a transverse cross-section of the sheet of Figure 6;
Figure 8 shows connected opposing edges of a sheet used to form the liner; and
Figure 9 is a schematic diagram showing a system for lining a pipeline.

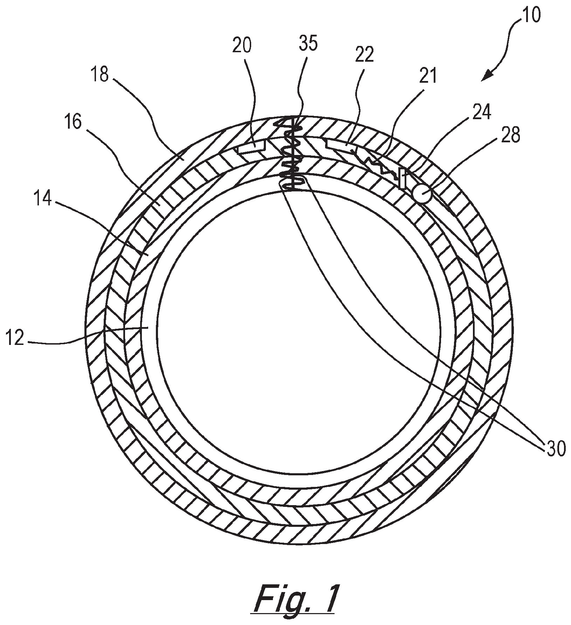

With reference to Figure 1 there is shown a liner 10 in accordance with the present invention. In particular, a cross-sectional view of the liner 10 is shown in Figure 1. As shown, the liner 10 may be a tubular liner and in the depicted example is made up of a resin carrier layer 12, a first protective layer 14, a lattice 16, and a second protective layer 18. Each of these layers will be described in greater detail below.

As shown the resin carrier layer 12 may be the radially innermost layer, and the first protective layer 14 may be provided between the resin carrier layer 12 and the lattice 16. The second protective layer 18 may be the radially outermost layer, and lattice 16 may be provided between the first and second protective layers 14, 18. The liner 10 may be formed for eversion within a pipeline, and the resin carrier layer 12 may be fixed to the inner surface of the pipeline.

As shown the liner 10 may comprise first and second longitudinally extending ribbons 20, 22, which each carry at least one longitudinally extending and electrically conductive wire. The first and second ribbons 20, 22 are preferably formed from a non-conductive material and will be described in greater detail below.

As depicted, the liner 10 may also comprise a temperature sensor 24, which may be arranged to communicate with a controller and to provide temperature data relating to the liner 10 to the controller in use. Preferably, there are multiple temperature sensors 24 provided along the length of the liner 10. In the depicted example, the temperature sensor 24 is electrically connected to the electrically conductive wire carried by the second ribbon 22 by connecting wire 21. Preferably, the temperature sensor 24 is embedded within the liner 10 as depicted. Alternatively, the temperature sensor 24 may be placed on an outer surface of the liner 10.

As shown, the liner 10 may also comprise a near field communication device 28. The near field communication device 28 may store data pertaining to the liner 10. The information stored could, for example, be: the date of installation, individual installer details, company installer details, materials supplier details, job number, customer details, resin type, resin batch number, liner batch number, the liner type and length, installation company contact details or the temperature used to cure the liner. The near field communication device 28 is shown embedded within the liner 10. However, the near field communication device 28 may be attached to an outer surface of the liner 10 just before installation.

As shown, the liner 10 is preferably formed from a rolled sheet with connected opposing edges 30. The various layers of the sheet will be described in detail below. The opposing edges 30 are preferably connected by a thread 35 which comprises a non-conductive material. However, other means could be employed, such as adhesive or tape.

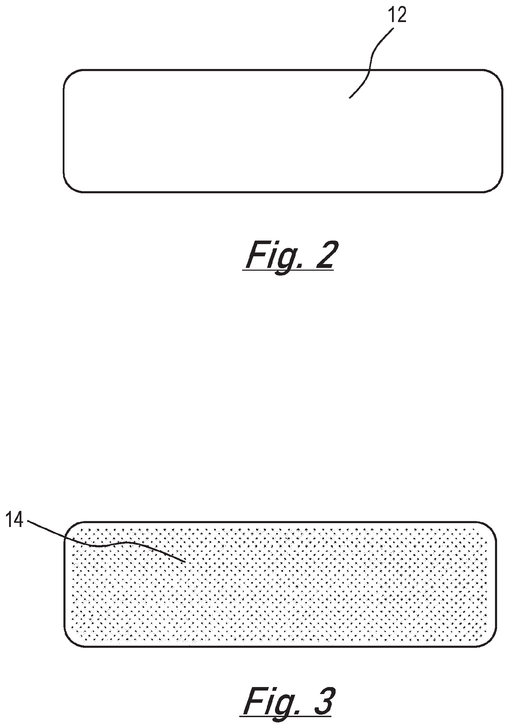

With reference to Figures 2 to 5, how the sheet used to form the liner 10 is constructed will now be described.

The resin carrier layer 12 is shown in greater detail in Figure 2. The resin carrier layer is formed to carry a heat-curable resin (i.e. a resin that cures when heated). This is known in the art as "hot cure resin". The resin carrier layer 12 may be provided with or without the heat-curable resin. In particular, the resin carrier layer 12 may be impregnated with the heat-curable resin as part of the manufacturing process of the liner. Alternatively, the resin carrier layer 12 may be impregnated at the point of use. In particular, the resin carrier layer may comprise an impregnated material which is impregnated with the heat-curable resin. The impregnated material may comprise glass fibre, polyester or any other suitable carrier material, and the heat curable resin may comprise epoxy, silicate, polyester or vinylester.

With reference to Figure 3, the first protective layer 14 is shown in greater detail. The first protective layer 14 serves to protect the lattice 16 from the heat curable resin carried by the resin carrier layer and is placed on top of the resin carrier layer 12. Preferably, the first protective layer 14 is waterproof and most preferably the first protective layer comprises one or more of polyvinyl chloride, polythene, polyurethane and silicone. The first protective layer 14 may comprise adhesive.

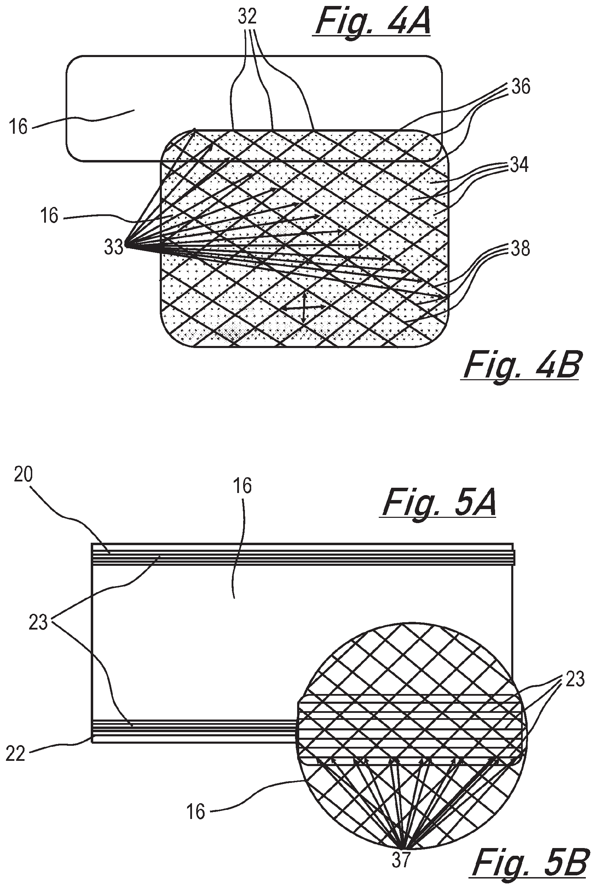

With reference to Figures 4A and 4B, the lattice 16 is placed on top of the first protective layer. The lattice 16 is formed of intersecting elongate elements 32 that comprise a heat resistive material (i.e. a material that heats up when a current is passed through it). The intersecting elongate elements 32 may intersect each other at intersection points 33. As depicted the lattice 16 may be a regular lattice and define trapezoidal apertures 34. The elongate elements 32 may comprise a first set of elongate elements 36 which extend mutually parallel to one another in a first direction and a second set of elongate elements 38 which extend mutually parallel to one another in a second and different direction. The angle between the first and second direction may be 90 degrees or in the range of 70 to 110 degrees. Preferably, the angle is 80 to 100 degrees, and most preferably the angle is 85 to 95 degrees. The lattice 16 may be formed from any suitable material such as carbon fibre.

With reference to Figures 5A and 5B, the first and second ribbons 20, 22 are positioned on top of the lattice 16. Each of the ribbons 20, 22 extends longitudinally along the length of the sheet and comprises a strip of non-conductive material which carries at least one electrically conductive wire. The first and second ribbons 20, 22 are positioned on top of the lattice 16 such that the electrically conductive wires are in contact with the lattice 16. Preferably, and as depicted, each of the ribbons 20, 22 carries multiple electrically conductive wires 23 which contact the lattice at multiple points 37 along its length. The second protective layer 18 is then positioned on top of the ribbons to form the sheet. The second protective layer 18 serves to provide an outer skin for the liner. Preferably, the second protective layer 18 is waterproof and most preferably the second protective layer comprises one or more of polyvinyl chloride, polythene, polyurethane and silicone.

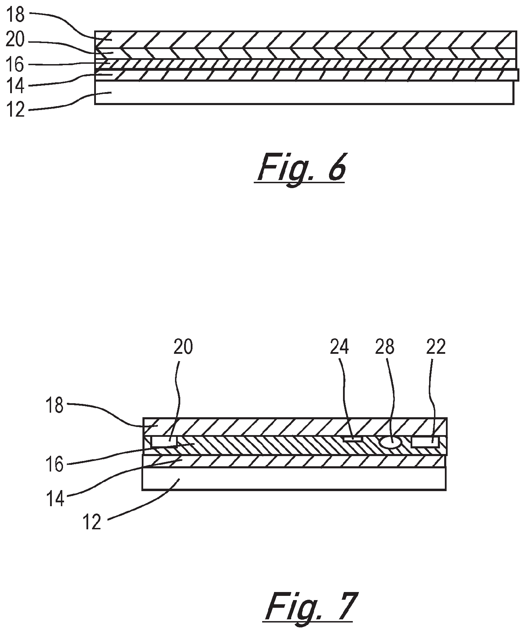

Once the second protective layer 18 is positioned over the first and second ribbons 20, 22 a sheet suitable for forming the liner 10 of Figure 1 is formed. Figure 6 shows a longitudinal cross-section of the sheet and Figure 7 shows a transverse cross-section of the sheet. The sheet is then rolled and connected along opposing edges to form the tubular liner shown in Figure 1 as described above.

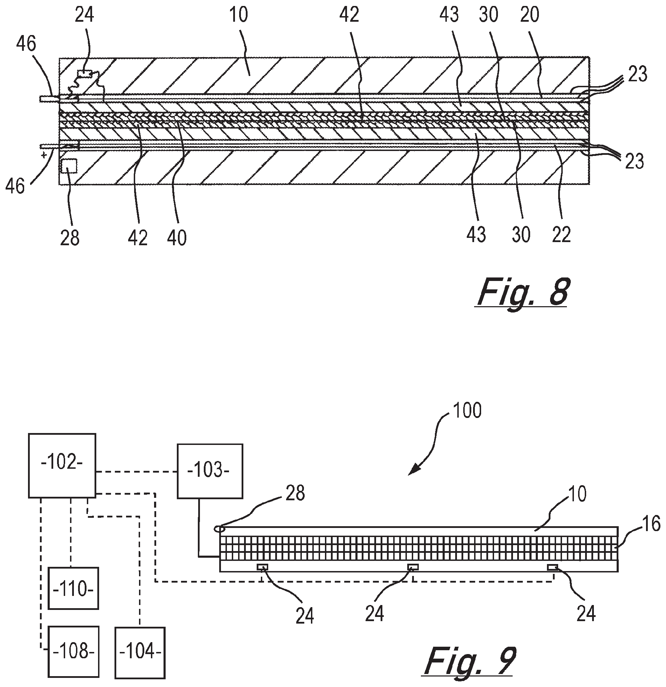

Figure 8 shows the connected opposing edges 30 in greater detail. As shown optionally the opposing edges 30 abut each other along line 40 and are connected by stitches 42 comprising non-conductive thread. Preferably, the stitches 42 are covered with heat bonded tape 43. Each of the first and second ribbons 20, 22 preferably extends along the full length of the liner 10 and supports a plurality of electrically conductive wires 23 extending along the full length of the liner. Preferably, the electrically conductive wires 23 of each of the ribbons are provided with electrical connectors 46. As shown, preferably in use the electrical connector 46 of the first ribbon 20 has a negative polarity and the electrical connector 46 of the second ribbon 22 has a positive polarity. Preferably each of the ribbons 20, 22 are provided adjacent (i.e. run alongside) the connected edges 30. As shown the at least one temperature sensor 24 and near field communication device 28 are preferably embedded within the liner 10. However, they may be attached to an outer surface of the liner 10 at the point of use.

Figure 9 shows a system 100 for lining a pipeline. As shown, the system 100 comprises the liner 10 described above, and a controller 102 arranged to control a supply of current to the lattice 16 of the liner 10. In particular, the controller 102 may be in communication with a power supply 103 which supplies current to the lattice 16, as shown. The system may further comprise a display 104 arranged to display data provided to it via the controller. A user input control may be associated with the display 104.

The system may further comprise a near field communication device reader 110, and the controller 102 may be in communication with the near field communication device reader 110. The controller 102 may be arranged to communicate a first signal from the near field communication device reader 110 to the display 104, or to a data store that may be connected to the controller 102.

As depicted the controller 102 is also in communication with a machine 108 operable to load data onto a near field communication device 28. This allows the liner to be electronically tagged before it is used to line a pipeline, meaning subsequent lining operations can be carried out more effectively. Preferably, the controller 102 is arranged to not supply current to the lattice 16 until the near field communication device has been loaded with the data.

The controller 102 is preferably in communication with the at least one temperature sensor 24 of the liner 10 and is arranged to control the supply of current to the lattice 16 of the liner 10 in response to a second signal from the at least one temperature sensor 24. In this way, the temperature of the lattice 16 can be controlled and overheating of the liner can be prevented. Preferably and as depicted there are a plurality of temperature sensors 24 spaced apart along the length of the liner 10.

The controller 102 may be in communication with an alarm which the controller 102 is arranged to activate if the controller receives a third signal from the at least one temperature sensor 24 that a sensed temperature has exceeded a pre-determined alarm threshold. In this way, overheating can be prevented. Preferably, the alarm may be a visual alarm provided on the display 104. However, an audio alarm may also be provided.

With reference to Figure 9, in use, when the liner is to be used to line a pipeline, if the resin carrier layer of the liner does not already carry a heat-curable resin as it has been supplied "dry", the heat-curable resin is added to the resin carrier layer as a first step. The liner 10 is then secured to an inversion drum or other suitable means, then everted within a pipeline such that the resin carrier layer abuts the inner surface of the pipeline. The controller 102 can then cause the power supply 103 to then supply current to the lattice 16. This has the effect of heating the heat-curable resin carried by the resin carrier layer, thereby curing the resin and securing the liner 10 to the inner surface of the pipeline.

The controller 102 may not allow the supply of current to the lattice 16 until it has received a notification from the machine 108 operable to load data onto the near field communication device that the data has indeed been loaded onto the near field communication device. This ensures that the liner 10 is always tagged with a near field communication device loaded with data pertaining to it (such as its construction) ensuring that subsequent lining operations are efficiently and effectively carried out. Once the near field communication device has been loaded with the data it may be attached to the liner, preferably with adhesive.

If the pipeline has been lined previously with an old liner and the old liner was tagged with an old near field communication device, the operator can obtain information relating to the old liner by scanning the old near field communication device with the near field communication device reader 110. This information may be communicated to the user by the controller 102 via the display 104.

During the heating of the liner 10 the at least one temperature sensor 24 feeds back temperature data to the controller 102. If the at least one temperature sensor indicates to the controller 102 that the sensed temperature has exceeded a pre-determined threshold the controller 102 can adjust the supply of current to the lattice 16 to prevent overheating of the liner. If the controller 102 receives notification from the at least one temperature sensor 24 that the temperature exceeds a pre-determined alarm threshold, the controller 102 activates the alarm, thereby indicating to the operator that the liner is overheating, meaning they can cease the operation and prevent damage to the liner 10.

The one or more embodiments are described above by way of example only. Many variations are possible without departing from the scope of protection afforded by the appended claims.

### CLAUSES

1. A liner for lining a pipeline, comprising:
   a resin carrier layer; and
   a lattice comprising a resistive heating material.
2. The liner of clause 1, wherein the lattice is a regular lattice.
3. The liner of clause 1 or 2, wherein the lattice comprises a plurality of elongate elements comprising a first set and a second set, wherein the elongate elements of the first set intersect with the elongate elements of the second set, wherein the elongate elements of the first set extend in a first direction mutually parallel to one another, wherein the elongate elements of the second set extend in a second direction mutually parallel to one another.
4. The liner of clause 3, wherein each elongate element in the first set or the second set is separated from the adjacent element in the set by a separation that is greater than the greatest transverse dimension (W) of the element.
5. The liner of any preceding clause, further comprising:
   first and second ribbons extending along the length of the liner and including a non-conductive strip of material carrying at least one longitudinally extending and electrically conductive wire in contact with the lattice.
6. The liner of any preceding clause, further comprising a first protective layer, wherein the first protective layer is located between the lattice and the resin carrier layer.
7. The liner of clause 6, further comprising a second protective layer, wherein the lattice is located between the first protective layer and the second protective layer.
8. The liner of clause 7, wherein the second protective layer is waterproof and optionally comprises one or more of polyvinyl chloride, polythene, polyurethane and silicone
9. The liner of any of clauses 6 to 8, wherein the first protective layer is waterproof, and optionally comprises one or more of polyvinyl chloride, polythene, polyurethane and silicone.
10. The liner of any of clauses 6 to 9, wherein the first protective layer is formed from adhesive.
11. The liner of any preceding clause, wherein the liner is tubular and formed from a rolled sheet having opposing edges which are connected to each other.
12. The liner of clause 11 when clause 11 is dependent on clause 5, wherein the first and second ribbons are provided adjacent the connected opposing edges.
13. The liner of any preceding clause, wherein the resin carrier layer carries a heat-curable resin.
14. The liner of any preceding clause, further comprising at least one near field communication device.
15. The liner of any preceding clause, further comprising at least one temperature sensor.
16. The liner of clause 15, wherein the at least one temperature sensor comprises a plurality of temperature sensors spaced apart along the length of the liner.
17. A method of lining a pipeline, comprising:
   i) providing a liner for the pipeline, including:
      a resin carrier layer, and a lattice comprising a resistive heating material, wherein the resin carrier layer carries a heat-curable resin;
   ii) everting the liner within the pipeline such that the resin carrier layer is positioned on an inner surface of the pipeline; and
   iii) passing an electrical current through the lattice to heat the lattice and cure the resin of the resin carrier layer.
18. The method of clause 17, wherein the method further comprises securing to the liner a first near field communication device carrying data pertaining to the liner.
19. The method of clause 18, wherein the method comprises the step of loading information pertaining to the liner onto the first near field communication device and the step of loading the information pertaining to the liner onto the first near field communication device is performed before steps ii) and iii).
20. The method of any of clauses 17 to 19, wherein the liner further comprises at least one temperature sensor, wherein the method comprises adjusting the supply of electrical current to the lattice in response to a signal from the at least one temperature sensor.
21. The method of any of clauses 17 to 20, wherein the liner is a new liner, and an old liner lined the pipe before providing step i), wherein the method further comprises the step of obtaining information from a second near field communication device secured to the old liner using a near field communication device reader.
22. The method of any of clauses 17 to 21, wherein the liner is the liner of any of clauses 1 to 13.
23. A system for lining a pipeline, comprising:
   a liner for the pipeline, including:
      a resin carrier layer, and
      a lattice comprising a resistive heating material; and
   a controller operable to control a supply of current to the lattice.
24. The system of clause 23, wherein the system further comprises a near field communication device reader in communication with the controller, wherein the controller is connected to or connectable to a display and/or data store and the controller is arranged to communicate a first signal from the near field communication device reader to the display and/or data store.
25. The system of clause 23 or 24, wherein the system further comprises a machine operable to load data onto a near field communication device.
26. The system of any of clauses 23 to 25, wherein the controller is arranged to not supply current to the lattice until the near field communication device has been loaded with the data.
27. The system of any of clauses 23 to 26, wherein the liner further comprises at least one temperature sensor, wherein the controller is in communication with the at least one temperature sensor and is arranged to adjust the supply of current to the lattice in response to a second signal from the at least one temperature sensor.
28. The system of any of clauses 23 to 27, wherein the system further comprises an alarm in communication with the controller and the controller is arranged to activate the alarm if the controller receives a third signal from the at least one temperature sensor that a sensed temperature has exceeded a pre-determined threshold.
29. The system of any of clauses 23 to 28, wherein the liner is the liner of any of clauses 1 to 13.

## Claims

1. A method of lining a pipeline, comprising:
i) providing a liner for the pipeline, including:
a resin carrier layer, and a lattice comprising a resistive heating material, wherein the resin carrier layer carries a heat-curable resin;
ii) everting the liner within the pipeline such that the resin carrier layer is positioned on an inner surface of the pipeline; and
iii) passing an electrical current through the lattice to heat the lattice and cure the resin of the resin carrier layer.

2. The method of claim 1, wherein the method further comprises securing to the liner a first near field communication device carrying data pertaining to the liner.

3. The method of claim 2, wherein the method comprises the step of loading information pertaining to the liner onto the first near field communication device and the step of loading the information pertaining to the liner onto the first near field communication device is performed before steps ii) and iii).

4. The method of any of claims 1 to 3, wherein the liner further comprises at least one temperature sensor, wherein the method comprises adjusting the supply of electrical current to the lattice in response to a signal from the at least one temperature sensor.

5. The method of any of claims 1 to 4, wherein the liner is a new liner, and an old liner lined the pipe before providing step i), wherein the method further comprises the step of obtaining information from a second near field communication device secured to the old liner using a near field communication device reader.

6. The method of any preceding claim, wherein the lattice is a regular lattice.
